# FASCICULE DE BREVET EUROPEEN

(11) **EP 0 921 416 B1**
(45) Date de publication et mention de la délivrance du brevet: **11.09.2002**
(21) Numéro de dépôt: 98402975.1
(22) Date de dépôt: 27.11.1998
(51) Int. Cl.: G01V 1/42

(54) **Méthode de surveillance sismique d'une zone souterraine en cours d'exploitation permettant une meillure identification d'évenèments significatifs**
Verfahren fur verbesserte Identifizierung von seismischen Ereignissen in untererdischen Volumen während Erdölproduktion
Method for improved identification of seismic events in a subsurface area under oilfield production conditions

(30) Priorité: 08.12.1997 FR 9715597
(43) Date de publication de la demande: 09.06.1999
(73) Titulaire: INSTITUT FRANCAIS DU PETROLE, 92852 Rueil-Malmaison Cedex (FR); GAZ DE FRANCE (SERVICE NATIONAL), F-75017 Paris (FR)
(72) Inventeur: Deflandre, Jean-Pierre, 95120 Ermont (FR)

(56) Documents cités:
- WO-A-98/09182
- FR-A- 2 703 470
- GB-A- 2 292 802
- US-A- 5 010 527
- US-A- 5 373 486
- WILLS P.B. ET AL.: "active and passive imaging of hydraulic fractures" GEOPHYSICS: THE LEADING EDGE OF EXPLORATION, vol. 11, no. 7, 1 juillet 1992, pages 15-22, XP002076021
- PATENT ABSTRACTS OF JAPAN vol. 008, no. 265 (P-318), 5 décembre 1984 & JP 59 132383 A (FUJITSU KK), 30 juillet 1984

## Description

La présente invention concerne une méthode pour faciliter la discrimination et l'identification d'événements sismiques ou micro-sismiques relatifs à l'exploitation dune zone souterraine, au moyen par exemple de capteurs permanents.

La méthode selon l'invention est applicable à des zones-réservoirs ou de cavités souterraines en cours d'exploitation utilisées d'une façon générale soit pour en extraire des fluides, soit pour y injecter des fluides.

La localisation des points d'une zone souterraine qu'il s'agisse d'une zone-réservoir ou d'une cavité, où se produisent des événements micro-sismiques liés à une activité ayant pour effet de modifier le champ de contraintes, est d'un grand intérêt pour une bonne exploitation de la zone, qu'il s'agisse d'une production de fluides extraits d'un gisement par un ou plusieurs puits ou bien d'une injection de fluides dans la zone.

On peut par exemple surveiller l'évolution d'un gisement d'hydrocarbures en cours de production ou bien de sites géothermiques. Dans le cas de récupération assistée notamment, on cherche à balayer l'huile hors de la roche par des injections de fluides à des pressions et des températures pouvant être très différentes de celles du milieu. Les variations de contraintes qui en résultent peuvent induire une fracturation du milieu qui modifie les circulations des fluides à l'intérieur du gisement et qu'il est important de bien situer.

On connaît aussi des utilisations de gisements souterrains pour le stockage de fluides. Il peut s'agir par exemple de réservoirs de stockage en phase liquide ou gazeuse où il est possible de noter une certaine activité micro-sismique induite par des variations significatives du débit de gaz que l'on soutire de ces réservoirs ou que l'on y injecte.

Il peut s'agir aussi de zones-réservoirs ou cavités utilisées pour le stockage de déchets, qui doivent être surveillées dans le but de respecter l'environnement et de satisfaire aux réglementations de plus en plus contraignantes concernant la pollution. On peut utiliser un réservoir souterrain pour y injecter des fluides de forage plus ou moins chargés en particules solides, que la réglementation interdit de déverser après usage sur les sites de forages.

La température des fluides injectés est généralement très différentes de celle du milieu à la profondeur où on les injecte, ce qui, si l'injection est massive, a pour effet de produire des contraintes thermiques génératrices de fractures avec pour conséquence une certaine activité sismique. La pression d'injection de ces boues peut également jouer pour créer des contraintes et entraîner des modifications plus ou moins importantes du milieu

L'activité sismique induite par les effets de la pression ou de la température peut révéler par exemple la formation de fractures ou la sollicitation de fractures déjà existantes. Elles contribuent à modifier les voies d'écoulement des fluides à l'intérieur du milieu, ou bien elles créent des voies d'évasion de fluides hors du gisement, des ruptures de confinement avec possible pollution des zones voisines, notamment vers un aquifère exploité pour l'alimentation en eau potable qu'il importe de déceler.

La surveillance des gisements servant au stockage de déchets nucléaires pour éviter que les opérations d'injection où l'élévation de la température locale qui résulte du stockage, ne provoquent des ruptures dans les couches assurant le confinement est aussi dune très grande importance.

Si les origines mécaniques d'une activité micro-sismique sont assez claires, l'analyse des phénomènes observés n'en reste pas moins délicate dans la plupart des cas, en raison d'un manque de moyens affectés à l'acquisition des résultats par exemple, des différentes échelles d'observation des phénomènes, de la connaissance limitée que l'on a du site investigué, etc. Le facteur temps est également très important. Certains événements succèdent de peu le phénomène déclencheur. C'est le cas par exemple pour les fracturations hydrauliques où la localisation des événements permet de cartographier tout ou partie de la fracture créée. D'autres produisent des effets différés, notamment en cas de production massive ou bien de transfert massif de fluide d'une zone du gisement vers une autre, avec un rayon d'influence souvent supérieur aux dimensions du réservoir.

Avec la surveillance micro-sismique encore appelée écoute passive, le but à terme pour l'exploitant, est d'interpréter très rapidement les données en relation avec les données classiques d'exploitation (pression, débit, température etc.) de sorte qu'il puisse prendre en compte la réponse mécanique du site dans le protocole d'exploitation afin de préserver la productivité du ou des puits voire du site. L'activité micro-sismique observée pouvant être associée à une dégradation mécanique du milieu pouvant engendrer des venues de solides, à l'ouverture de fractures pouvant mettre en communication le réservoir avec un aquifère ou à d'autres phénomènes d'origine thermo-poro-mécanique dont les conséquences peuvent induire une dégradation des performances des puits voire leur endommagement.

Le repérage et la localisation d'événements sismiques ou micro-sismiques dans un gisement peuvent se faire, de façon connue en descendant dans un puits au bout d'un câble, une sonde contenant un récepteur sismique triaxial que l'on plaque contre la paroi d'un puits. Par comparaison des signaux captés par les différents capteurs du récepteur sismique dans la sonde (analyse de la polarisation des ondes reçues), il est possible de déterminer la direction suivant laquelle l'événement sismique s'est produit, à condition que le milieu de propagation soit relativement homogène, voire de le localiser lorsque les signaux reçus contiennent une succession d'ondes de type P et d'ondes de type S.

Par le brevet US 5 010 527, on connaît une méthode pour déterminer la profondeur d'une zone de fracturation hydraulique comportant l'utilisation d'un capteur à trois composantes que l'on plaque contre les parois du puits à différentes profondeurs et l'analyse comparative des signaux enregistrés pour sélectionner leurs causes.

Une telle méthode demande pour sa mise en oeuvre que le puits soit libéré le temps nécessaire pour y descendre la sonde jusqu'à la profondeur souhaitée, ce qui n'est pas compatible avec une surveillance à long terme.

Par les brevets FR 2 593 292, 2 681 373, 2 685 139, 2 703 470 notamment, on connaît différentes techniques pour surveiller l'évolution au cours du temps de réservoirs souterrains comportant l'utilisation de capteurs sismiques ou autres installés a demeure dans un ou plusieurs puits, sans perturber les opérations diverses (production, injection, interventions diverses menées par l'intermédiaire de ces puits). L'installation de ces capteurs à demeure dans des puits, permet d'exercer une surveillance sismique d'un réservoir dans le but de détecter différents phénomènes liés à son exploitation.

Les capteurs sismiques permanents sont installés par exemple à l'extérieur d'un casing ou cuvelage que l'on descend dans le puits. Ils sont noyés dans le ciment qui est normalement injecté dans l'espace annulaire entre lui et le puits et qui assure leur bon couplage avec les formations environnantes.

Les capteurs sismiques peuvent encore être fixés à l'extérieur d'une colonne d'exploitation qui est installée dans un puits lors des opérations de complétion. Ils sont associés à des moyens mobiles adaptés à les plaquer contre le casing du puits, et à des moyens de découplage pour filtrer les vibrations se propageant le long de la colonne d'exploitation.

L'enregistrement de l'activité micro-sismique, aussi appelée écoute passive ou surveillance micro-sismique, est favorisée par l'emploi de capteurs permanents de puits lorsque les phénomènes sont localisés à des profondeurs importantes (dès quelques centaines de mètres).

Par les brevets FR 2 703 457, 2 703 470, 2 728 973. on connaît des méthodes de surveillance active répétitive à long terme d'un réservoir par application d'ondes élastiques à une formation et acquisition des signaux-réponses renvoyés par la formation, ceci au moyen d'une installation permanente de moyens d'émission et de réception dans des puits ou au voisinage de la surface du sol. On réalise des traitements différentiels sur des acquisitions opérées dans des conditions identiques.

Par les brevets FR 2 688 896. 2 689 647 notamment, on connaît également des systèmes électroniques d'acquisition et de transmission étudiés spécialement pour collecter les signaux des capteurs permanents installés dans les puits extérieurement à des casings ou des colonnes d'exploitation, et les transmettre à un équipement d'enregistrement et de commande en surface lors de campagnes de surveillance ou de sismique répétitive de longue durée.

Dans le cas d'un puits dédié à la surveillance micro-sismique, les récepteurs et systèmes d'acquisition dont on dispose à l'heure actuelle, permettent de travailler dans de bonnes conditions. Il est possible de les paramétrer de telle sorte qu'ils n'enregistrent que des signaux présentant un intérêt pour la caractérisation du site, signaux que l'on qualifie de type E.

En revanche, l'identification des événements est rendue plus difficile si l'installation d'écoute est placée dans un puits d'exploitation, car on enregistre également des événements induits au niveau de la complétion que l'on qualifiera ci-après d'événements de type C. Ces événements sont générés par les arrêts et reprises d'injection, l'ouverture ou la fermeture de l'un des éléments de la complétion (vanne, packer etc.) pouvant être à des profondeurs quelconques dans le puits voire en surface (sur la tête de puits) et y compris au niveau de l'installation de surface (canalisations, appareils divers). Certaines de ces actions telle la mise en communication de la zone souterraine (réservoir) avec le réseau de surface, peuvent y induire du fait de variations de pression notamment, des événements de type E, souvent différés dans le temps et que l'on souhaite enregistrer et interpréter. Les événements de type C, qui peuvent être en très grand nombre sur un intervalle de temps relativement court (plus de 3400 événements en une semaine, pour donner un exemple pratique), nuisent à un suivi en temps réel des phénomènes géomécaniques induits au travers de l'acquisition des événements de type E dont le nombre sur une même période est souvent relativement faible (quelques dizaines par exemple).

Il est donc très difficile de discriminer rapidement les fichiers de données (enregistrements de signaux reçus) corespondant aux événements micro-sismiques de type E originaires des terrains, parmi ceux correspondant à ces événements de type C induits au niveau de la complétion. Tous (événements de type E et C) satisfont aux critères des algorithmes les plus courants de numérisation : détection par dépassement d'un seuil d'amplitude ou d'énergie et / ou détection par dépassement d'un seuil pour un rapport de pentes représentant la pente du signal sur un intervalle de temps court divisée par la pente du signal sur un intervalle de temps plus long (on déclenche sur un événement transitoire et non pas sur une dérive du signal) etc. Pour différencier les événements de type E et C, il faut alors introduire un algorithme plus adapté prenant en compte le spectre du signal, des temps de vol associés à des réflexions particulières des ondes dans la complétion, des variations d'amplitude entre différents types d'ondes, opérations bien plus difficiles à gérer en temps réel.

La méthode selon l'invention permet de faciliter l'identification d'événements sismiques ou micro-sismiques relatifs à l'exploitation d'une formation souterraine. Elle comporte l'installation dans un ou plusieurs puits, de récepteurs d'ondes élastiques émanant de la formation souterraine, couplés directement avec celle-ci, l'acquisition des signaux issus des différents récepteurs en réponse aux ondes reçues et leur enregistrement, et une analyse comparative des signaux enregistrés pour sélectionner des enregistrements.

La méthode est caractérisée en ce qu'elle comporte l'installation d'au moins un capteur de référence présentant un couplage acoustique direct avec des éléments d'un équipement technique d'exploitation de la formation pour la détection des ondes élastiques émanant de la formation ou liées directement à l'exploitation, l'acquisition des signaux issus de chaque capteur de référence, en réponse aux ondes reçues, et l'analyse comparée des signaux issus des dits récepteurs et de chaque capteur de référence pour trier les enregistrements en différentes familles selon que les événements dans la formation souterraine sont indépendants des événements détectés par chaque capteur de référence ou en dépendent directement ou indirectement.

La méthode comporte de préférence l'établissement d'un catalogue d'événements-types ayant un lien causal avec des interventions d'exploitation sur la zone souterraine, par corrélation entre les enregistrements des signaux reçus respectivement par les dits récepteurs et le (ou chaque) capteur de référence, permettant ainsi d'identifier la nature des événements sismiques ou micro-sismiques.

La méthode peut comporter aussi une étape de combinaison des enregistrements des signaux issus des récepteurs et du (ou de chaque) capteur de référence, permettant l'identification d'événements enregistrés.

Les récepteurs peuvent être par exemple des récepteurs permanents disposés à demeure dans au moins un puits derrière un tube de cuvelage ou bien dans l'annulaire entre un tube de cuvelage et une colonne d'exploitation, de façon dans tous les cas à le laisser libre pour l'exploitation de la zone souterraine.

Suivant un mode de mise en oeuvre, on utilise au moins un capteur de référence qui peut être couplé acoustiquement avec une colonne d'exploitation de la dite zone, ou encore à la fois à cette colonne et aux formations environnant le puits.

La méthode s'applique aussi bien aux opérations de surveillance sismique passive qu'aux opérations de prospection sismique active avec utilisation d'une source d'ondes élastiques et enregistrements des signaux émanant de la formation en réponse à l'excitation des terrains par le déclenchement de la source.

Le système selon l'invention comporte des récepteurs d'ondes élastiques couplés directement avec la formation environnant les puits, des moyens d'acquisition des signaux issus des différents récepteurs en réponse aux ondes reçues émanant de la formation et leur enregistrement, des moyens de transmission et un ensemble d'acquisition et de traitement des ondes reçues adapté à faire une analyse comparative des signaux enregistrés pour sélectionner des enregistrements. Il est caractérisé en ce qu'il comporte au moins un capteur de référence présentant un couplage acoustique direct avec des éléments d'un équipement technique d'exploitation de la formation pour la détection des ondes élastiques émanant de la formation ou liées directement à l'exploitation, des moyens d'acquisition et d'enregistrement des signaux issus de chaque capteur de référence en réponse aux ondes reçues, l'ensemble d'acquisition et de traitement des ondes reçues comportant des moyens de calcul programmés pour faire une analyse comparée des signaux issus des dits récepteurs et de chaque capteur de référence et pour trier les enregistrements en différentes familles selon que les événements dans la formation souterraine sont indépendants des événements détectés par chaque capteur de référence ou en dépendent directement ou indirectement.

La méthode selon l'invention présente de nombreux avantages. Un gain de temps important, tout d'abord, le tri des événements effectué précocement autorisant une analyse immédiate ou presque de ceux de type E. En rendant plus fiable la localisation des événements sismiques micro-sismiques, on améliore la qualité de la surveillance des sites, les résultats des suivis de production et dans certaines applications de stockage souterrain, on contribue à une meilleure protection de l'environnement et à plus de sécurité.

D'autres caractéristiques et avantages de la méthode et du dispositif selon l'invention, apparaîtront à la lecture de la description ci-après de modes de réalisation décrits à titre d'exemples non limitatifs, en se référant aux dessins annexés où :
- la Fig.1 montre schématiquement des récepteurs d'ondes élastiques R associés à un équipement de complétion de puits;
- la Fig.2 montre un premier exemple de moyens de découplage des récepteurs par rapport à la colonne d'exploitation;
- la Fig.3 montre un deuxième exemple de moyens de découplage flexibles des récepteurs par rapport à la colonne d'exploitation;
- la Fig.4 montre un troisième exemple, de moyens de découplage des récepteurs par rapport à la colonne d'exploitation;
- la Fig.5 montre schématiquement deux capteurs de référence l'un, T1, couplé acoustiquement avec la colonne d'exploitation, un autre , T2, couplé à la fois à la colonne et au tube de cuvelage;

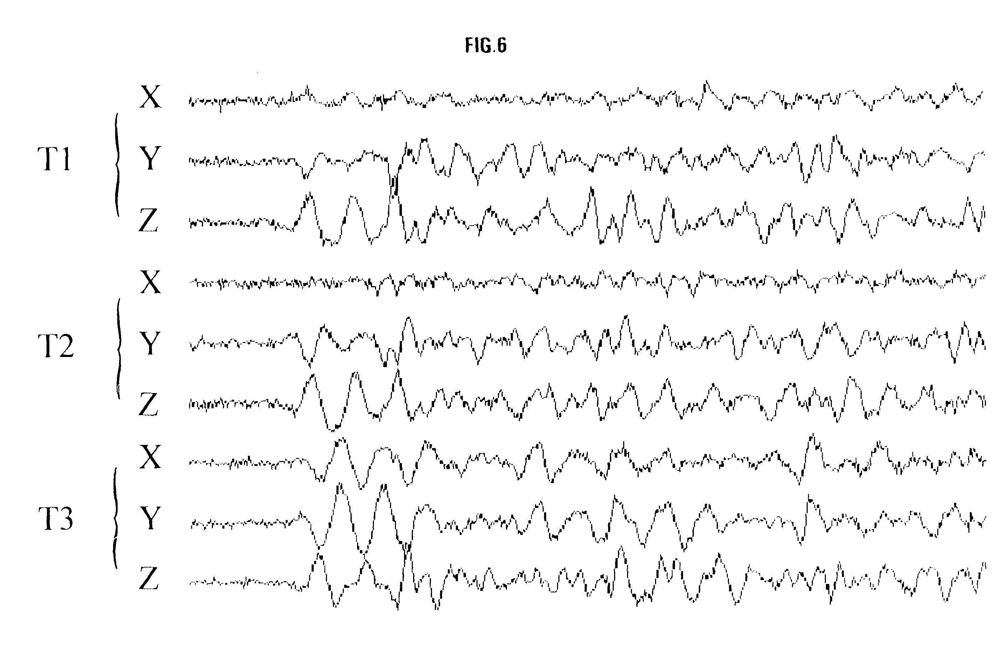

- la Fig.6 montre l'exemple d'un événement de type E enregistré sur trois capteurs trois composantes, qui est la conséquence mais seulement indirecte d'actions sur l'installation technique d'exploitation du site (mise en production, déplétion, injection etc.); et

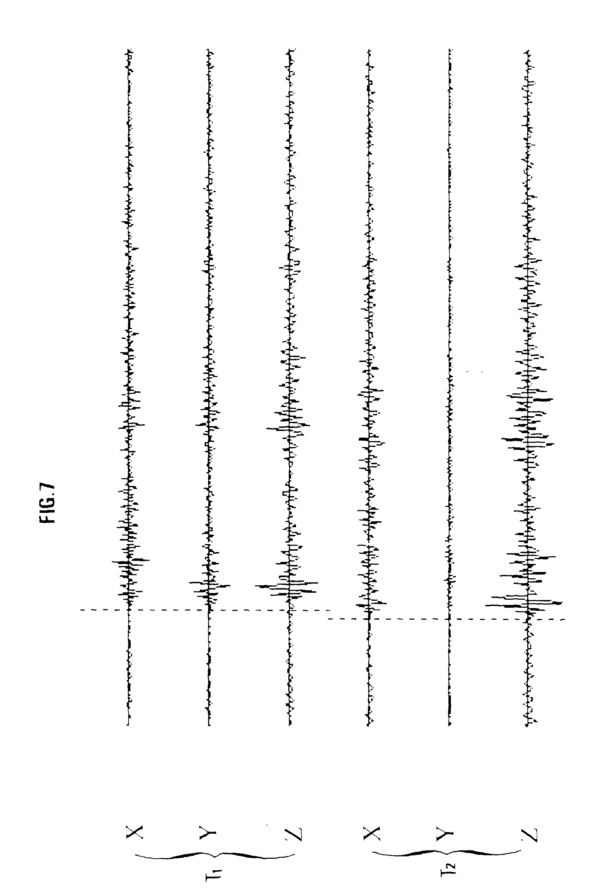

- la Fig.7 montre l'exemple de signaux sismiques captés sur deux capteurs trois composantes et représentatifs d'un événement de type C. traduisant directement des actions sur l'installation technique d'exploitation du site (ouverture ou fermeture de vannes par exemple).

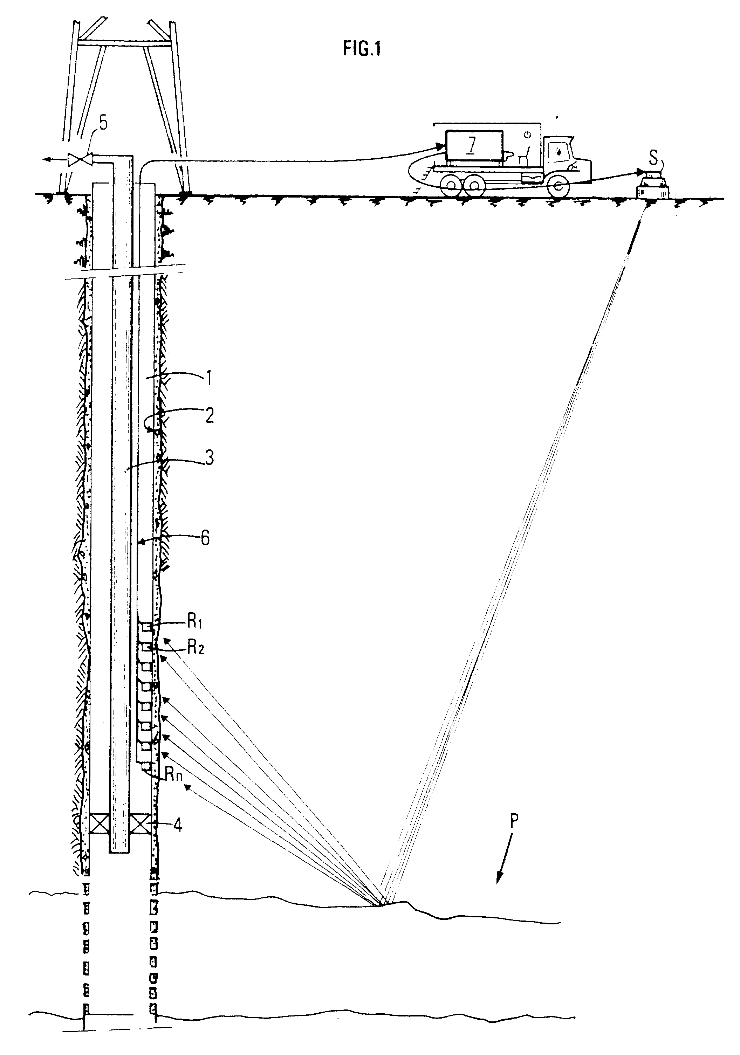

Le système de surveillance sismique ou micro-sismique schématisé à la Fig. 1 est installé dans un puits 1 pourvu d'un tube de cuvelage 2 qui, une fois en place est couplé avec les terrains environnants par une injection de ciment entre lui et le puits. Dans le puits cuvelé est descendu une colonne de production 3 constituée par interconnexion de sections tubulaires. Cette colonne 3 peut être pourvue vers sa base d'un organe d'obturation expansible 4 du type packer ou de tout autre dispositif usuel dans des puits d'exploitation. Par la fermeture de cet organe expansible, on isole l'espace annulaire entre la colonne et le tube. Au moyen de cette colonne, on intervient sur une zone souterraine P (pour en extraire des fluides ou pour en injecter). Des moyens de pompage (non représentés) et des vannes 5 permettent l'activation contrôlée de la zone considérée.

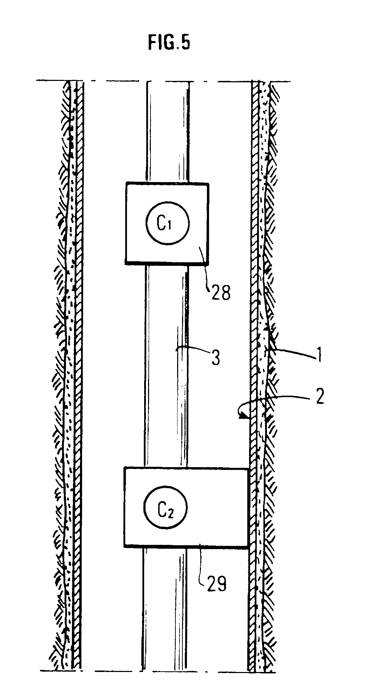

La méthode selon l'invention comporte l'installation dans un ou plusieurs puits d'un dispositif de réception comportant en combinaison :
- un ensemble de réception d'ondes élastiques (Fig.1) constitué d'une pluralité d'unités de réception d'ondes élastiques R1, R2.... Rn de tout type connu, pouvant être couplées en opération avec la paroi intérieure du tube de cuvelage 2 mais découplées acoustiquement de la colonne d'exploitation 3, et
- un ou plusieurs capteurs de référence T (Fig.5) sensibles aux déplacements, aux vitesses ou aux accélérations. Ils sont placés de façon à être couplés acoustiquement avec l'équipement de complétion (d'exploitation) et ainsi de recueillir tous les signaux liés aux différentes actions qui sont menées durant l'exploitation de chaque puits.

Les unités de réception R1-Rn sont réparties à des intervalles déterminés les uns des autres le long de la colonne tubulaire. Un câble multi-conducteurs 6 permet la connexion des unités de réception R1 à Rn, à un poste central de commande et d'enregistrement 7 en surface.

La connexion des unités de réception R1-Rn au poste central 7 peut être faite directement par des lignes de transmission dans le câble 6 ou mieux par l'intermédiaire d un ou plusieurs ensembles électroniques locaux assurant le multiplexage des signaux captés par les différentes unités de réception et leur transmission codée, tel que ceux décrits dans les brevets français Nos. 2 613 496 et 2 616 230 du demandeur.

Dans le cadre d'opérations de surveillance active du réservoir P, on peut utiliser une source sismique S disposée soit en surface (comme représenté), soit dans un puits, soit encore enterrée comme décrit dans le brevet FR-A-2 728 973.

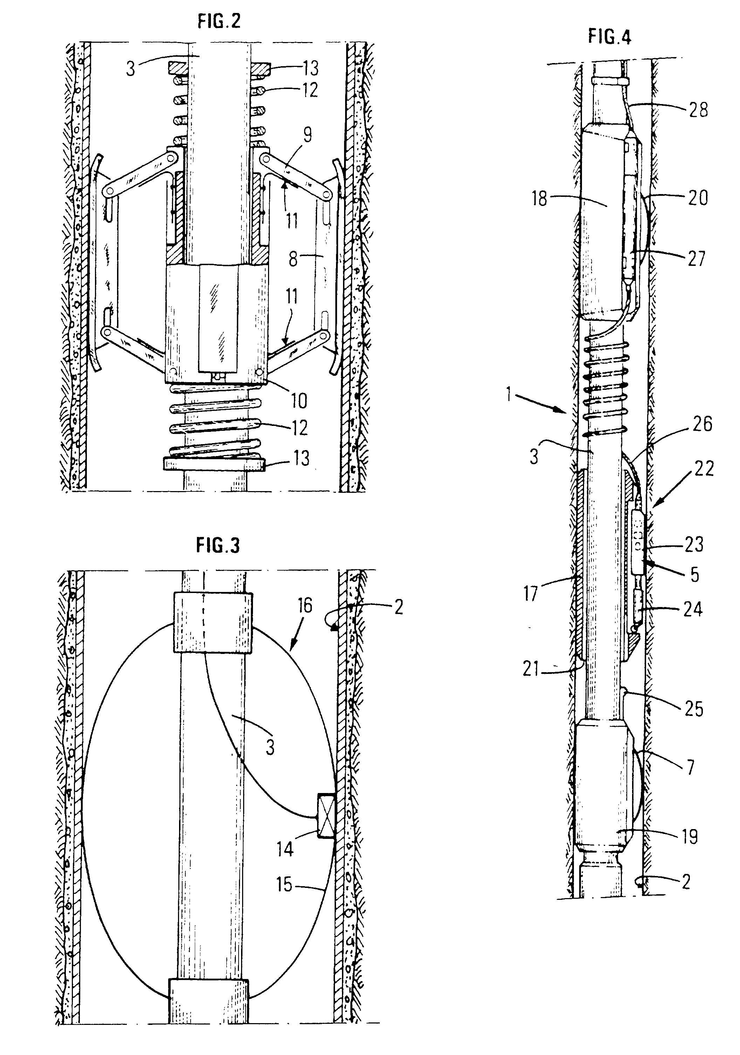

Comme déjà décrit dans le brevet FR 2 674 029 précité, les unités de réception R1-Rn peuvent (Fig. 2) être incluses dans des patins 8 appliqués contre la paroi intérieure du tube de cuvelage. Ces patins sont reliés par exemple à des bras 9 pouvant pivoter par rapport à un manchon 10 centré sur la colonne et maintenus en position d'écartement par des ressorts à lames 11. Des ressorts 12 maintiennent le manchon 10 entre deux butées fixes 13.

Suivant le mode de couplage de la Fig. 3. chaque unité de réception R peut être incluse par exemple dans un boîtier 14 assujettis à des lames flexibles 15 d'un excentreur à lames 16 lequel est fixé autour dune section de la colonne 3.

Les récepteurs R₁-Rₙ peuvent encore être couplés aux formations environnant le puits par un support tel que celui décrit dans le brevet FR 2 656 034 précité. Chaque support comporte un sabot intermédiaire 17 entre deux sabots d'excentrement 18, 19 fixés autour de la colonne 3 à une certaine distance l'un de l'autre. Les sabots d'excentrement sont pourvus chacun de lames de ressort 20 disposées identiquement de façon à les plaquer contre la paroi de cuvelage 2 suivant un même plan radial. Le sabot intermédiaire 17 entoure de même la colonne 3. Il est pourvu d'un passage central 21 dont la section est supérieure à celle de la colonne 3. Le sabot intermédiaire 17 comporte un équipage mobile 22 pourvu de logements pour des moyens capteurs 23 tels que des géophones tri-axiaux par exemple. Des ressorts non représentés sont disposes de manière à pousser l'équipage mobile vers sa position de couplage avec la paroi du tube de cuvelage. Des moyens hydrauliques incluant un vérin 24. permettent de commander son déplacement vers !a position d'extension. Un élément de liaison 25 est utilisé pendant la descente de la colonne pour relier le sabot intermédiaire aux deux autres. L'ensemble est agencé pour que, en position d'intervention, l'équipage mobile soit en contact avec le tube de cuvelage 2. et le sabot intermédiaire 17 est découplé mécaniquement de la colonne 3. Les récepteurs R1 à Rn sont reliés par des conducteurs 26 avec un boîtier électronique d'acquisition et de transmission numérisée 27 lequel est connecté à un câble multi-conducteurs 28 qui assure la liaison avec le poste central 7 en surface (Fig. 1).

Les capteurs de référence T (Fig.5) sont couplés directement avec la colonne d'exploitation par exemple (comme le capteur T1) ou bien éventuellement couplés acoustiquement à la fois à la colonne et aux parois environnant le puits (comme le capteur T2).

On peut utiliser par exemple au moins deux capteurs T au contact de la colonne, l'un placé à quelques mètres de profondeur par exemple, un autre, à plus grande profondeur. Ces capteurs de référence sont reliés à l'équipement d'enregistrement en surface, de la même façon que les récepteurs R (directement ou par l'intermédiaire de modules électroniques locaux (non représentés). Plusieurs capteurs de type T permettent de déterminer le sens de propagation des événements de type C.

Pour aider à l'interprétation et au traitement des données sismiques. d'autres types de capteurs peuvent être installés dans les puits tels que des hydrophones ou des accéléromètres.

La méthode selon l'invention permet tout d'abord, par une analyse comparée des enregistrements des signaux issus des capteurs permanents R1-Rn et du ou éventuellement des capteurs de référence T au contact de la colonne, d'isoler parmi tous les enregistrements effectués, les événements de type E (émanant de la zone surveillée),
- ceux qui sont la conséquence directe très proche dans le temps, d'actions sur l'équipement technique d'exploitation de la zone. Il s'agit notamment d'arrêts et de reprises d'injection de fluides ou de production par la colonne d'exploitation 3, qui peuvent avoir pour effet par exemple de créer dans une zone proche à la périphérie des puits, des variations brutales de pression au sein du milieu induisant des réajustements mécaniques, voire un endommagement mécanique de la formation, à l'origine d'émissions sismiques. et
- ceux qui en sont seulement la conséquence indirecte et plus ou moins retardée, du fait de la déplétion du réservoir et/ou dune injection massive. C'est le cas pour un phénomène de compaction du milieu que l'on peut observer dans les réservoirs crayeux de la Mer du Nord. C'est encore le cas quand se produit un réajustement des contraintes mécaniques sur une grande échelle, aux dimensions de la structure et parfois sur une région toute entière (plusieurs dizaines de km).

Elle permet aussi de mieux identifier l'influence du protocole de production appliqué sur le site ou la région du site sur le comportement géomécanique du site qui pourra également être comparé à l'évolution de productivité.

Selon leur emplacement les capteurs de référence T reçoivent donc préférentiellement les signaux émis au niveau de la complétion et permettent une identification en temps réel des événements de type C sur la base de critères simples (l'amplitude des signaux sur un certain nombre de voies par exemple, le franchissement d une valeur-seuil, un temps d'arrivée particulier. une fréquence etc.). En l'absence de signaux caractéristiques d événements de type C. ceux de type E peuvent être interprétés comme tels.

L'adjonction de ces capteurs de surveillance T permet également une interprétation plus fine des événements de type E. En effet en plaçant un nombre suffisant de tels capteurs T et/ou en étudiant leur réponse à des actions spécifiques au niveau de la complétion, on peut mettre en relation certains événements de type E avec la mise en service de tel ou tel autre puits. Un événement de type E localisé dans une région donnée du réservoir n'est émis par exemple que lorsqu'un certain puits est en communication avec le réservoir ou lorsqu'une certaine combinaison de puits est en service. On dresse auparavant un catalogue des événements de type C relatifs à chaque puits, chacun d'entre eux étant facilement identifiable et correspondant à une action précise ou une combinaison d'actions sur le puits ou la ligne de production.

Dans le cas d'un stockage de gaz dans un aquifère souterrain, de telles informations peuvent aider de manière significative à la compréhension des écoulements des fluides et par conséquent peuvent être exploitées pour optimiser l'implantation de nouveaux puits. Une exploitation intelligente des événements de types C sur l'ensemble d'un site constitue donc une manière rapide et fiable de mieux caractériser l'origine des événements de type E.

L'analyse comparée des signaux de type C et E permet d'évaluer des temps de réponse de certains phénomènes géomécaniques en connaissant le temps entre la mise en service d'un puits et l'occurrence de certains événements de type E.

Cette démarche permet d'identifier et de classifier les événements en relation avec telle ou telle action de l'exploitant du site afin d'optimiser le traitement en temps réel des événements de type E (générés dans le milieu en réaction à des interventions techniques).

Le traitement de ces événements de type E comporte dans un premier temps un tri des fichiers de données (enregistrements de signaux) dans différentes classes distinctes selon les événements C et/ou E qui leur correspondent et à appliquer aux fichiers de chaque classe tel ou tel traitement approprié. Une attention particulière doit être apportée aux événements qui sont susceptibles d'annoncer un risque d'exploitation: endommagement de l'ouvrage (puits, cavité etc.) ou du milieu: risques de venues de sable par exemple, et on les traite prioritairement.

On peut aussi appliquer des opérations de traitement connues aux événements de type E et C reconnus concomitants de façon à rendre plus lisibles les événements de type E.

Dans le cadre des acquisitions sismiques classiques, les capteurs couplés à la colonne de production 3 peuvent être utilisés pour identifier d'éventuelles ondes de tubes ou ondes guidées et contribuer ainsi à améliorer le traitement des données sismiques.

L'analyse des signaux peut être faite directement par interprétateur ou bien être confiée à un calculateur (non représenté) placé par exemple dans le poste central 7, programmé pour identifier la nature des événements en relation avec un catalogue pré-établi.

Un exemple simplifié (et sans aucun caractère limitatif), de tri possible en différentes familles est illustré par le tableau ci-dessous :

| Types d'évén | Réception par les capteurs T | Réception par les capteurs R1-Rn | famille F1 | famille F2 | famille F3 | famille F4 | Action |
|---|---|---|---|---|---|---|---|
| C1 | OUI | OUI | - | | | | action 1 |
| C2 | OUI | OUI | | + | | | action 2 |
| E | NON | OUI | | | | + | action 3 |
| E+C2 | OUI | OUI | | | + | | action 4 |

Dans ce tableau :
- C1 représente les signaux captés en réponse à une intervention sur l'équipement technique d'exploitation, le puits étant fermé sur le réservoir:
- C2, les signaux captés en réponse à une intervention sur l'équipement technique d'exploitation, le puits étant ouvert sur le réservoir:
- E, les signaux captés en réponse à des événements caractéristiques d'un phénomène géomécanique dans la zone étudiée
- F1 à F4. des familles de fichiers:
- +, des fichiers à analyser ou traiter pour la surveillance de la zone;
- -, des fichiers sans intérêt pratique pour la surveillance de cette même zone;
- action 1, un simple comptage d'événements et de préférence suppression des fichiers sans intérêt pratique;
- action 2-4. l'établissement par exemple d'un lien causal sélectif entre un événement de type E et un phénomène consécutif à l'exploitation de la zone, que ce soit par analyse directe de l'interprétateur, ou de façon automatique par un calculateur programmé pour analyser et trier les événements d'après un catalogue pré-établi.

On a décrit un mode de réalisation où les récepteurs sont portés par la colonne d'exploitation 3. On ne sortirait toutefois pas du cadre de l'invention en utilisant un ensemble de récepteurs (R1-Rn) inclus dans une ou plusieurs sondes d'un type connu descendues dans un ou plusieurs puits au bout d'un câble électro-porteur, en combinaison avec un ou plusieurs capteurs de référence couplés avec le tube de cuvelage 2 mais suffisamment éloignés des récepteurs R1-Rn, au voisinage de la tête de puits par exemple. Le couplage avec le tube de cuvelage d'un tel capteur peut s'effectuer en le noyant dans du ciment de scellement derrière le tube de cuvelage, comme décrit dans le brevet 2 593 292 précité.

## Revendications

1. Méthode pour faciliter l'identification d'événements sismiques ou micro-sismiques relatifs à l'exploitation d'une formation souterraine, comportant l'installation dans un ou plusieurs puits, de récepteurs (R1-Rn) d'ondes élastiques émanant de la formation souterraine, couplés directement avec celle-ci, l'acquisition des signaux issus des différents récepteurs (R1-Rn) en réponse aux ondes reçues et leur enregistrement, et une analyse comparative des signaux enregistrés pour sélectionner des enregistrements, **caractérisé en ce qu'**elle comporte :
- l'installation d'au moins un capteur de référence (T) présentant un couplage acoustique direct avec des éléments d'un équipement technique d'exploitation de la formation pour la détection des ondes élastiques émanant de la formation ou liées directement à l'exploitation ;
- l'acquisition des signaux issus de chaque capteur de référence (T), en réponse aux ondes reçues, et
- l'analyse comparée des signaux issus des dits récepteurs (R1-Rn) et de chaque capteur de référence (T), pour trier les enregistrements en différentes familles selon que les événements (E) dans la formation souterraine sont indépendants des événements (C1, C2) détectés par chaque capteur de référence (T) ou en dépendent directement ou indirectement.

2. Méthode selon la revendication 1, **caractérisée en ce qu'**elle comporte l'établissement d'un catalogue d'événements-types ayant un lien causal avec des interventions d'exploitation sur la formation souterraine, par corrélation entre les enregistrements des signaux produits respectivement par les dits récepteurs (R1-Rn) par chaque capteur de référence (T).

3. Méthode selon la revendication 1, **caractérisée en ce qu'**elle comporte en outre la combinaison des enregistrements des signaux produits par les dits récepteurs (R1-Rn) et chaque capteur de référence (T), permettant l'identification d'événements enregistrés.

4. Méthode selon l'une des revendications précédentes, **caractérisée en ce qu'**elle comporte la sélection d'enregistrements d'événements liés à des fractures hydrauliques et la détermination de l'emplacement de ces fractures par l'analyse comparée des composantes des signaux issus d'au moins deux récepteurs multi-composantes ( R).

5. Méthode selon l'une des revendications précédentes, **caractérisée en ce qu'**elle comporte l'installation de récepteurs permanents (R1-Rn) disposés dans au moins un puits derrière un tube de cuvelage (2) de façon à le laisser libre pour l'exploitation de la formation souterraine.

6. Méthode selon l'une des revendications précédentes, **caractérisée en ce qu'**elle comporte l'installation de récepteurs permanents (R1-Rn) disposés dans au moins un puits dans l'annulaire entre un tube de cuvelage (2) et une colonne d'exploitation (3), et découplés acoustiquement de cette colonne (3), de façon à le laisser libre pour l'exploitation de la formation souterraine.

7. Méthode selon l'une des revendications 5 ou 6, **caractérisée en ce que** les récepteurs permanents (R1-Rn) sont installés dans un même puits.

8. Méthode selon l'une des revendications 5 ou 6, **caractérisée en ce que** des récepteurs permanents (R1-Rn) sont installés dans des puits différents.

9. Méthode selon l'une des revendications précédentes, **caractérisée en ce qu'**elle comporte l'utilisation d'au moins un capteur de référence (T) couplé mécaniquement avec une colonne (3) d'exploitation de la dite formation.

10. Méthode selon l'une des revendications 1 à 8, **caractérisée en ce qu'**elle comporte l'utilisation d'au moins un capteur de référence (T) couplé acoustiquement à la fois avec une colonne (3) d'exploitation de la dite formation et avec la dite formation.

11. Méthode selon l'une des revendications précédentes, **caractérisée en ce qu'**elle comporte l'utilisation de plusieurs capteurs de référence (T) placés à des profondeurs différentes d'au moins un puits, permettant de déterminer le sens de propagation d'événements captés par les capteurs de référence.

12. Système pour faciliter l'identification d'événements sismiques ou micro-sismiques dans une formation souterraine en cours d'exploitation, comportant des récepteurs d'ondes élastiques (R1-Rn) couplés directement avec la formation environnant les puits, des moyens d'acquisition des signaux issus des différents récepteurs (R1-Rn) en réponse aux ondes reçues émanant de la formation et leur enregistrement, des moyens de transmission (6) et un ensemble d'acquisition et de traitement (7) des ondes reçues adapté à faire une analyse comparative des signaux enregistrés pour sélectionner des enregistrements, **caractérisé en ce qu'**il comporte au moins un capteur de référence (T) présentant un couplage acoustique direct avec des éléments d'un équipement technique d'exploitation de la formation pour la détection des ondes élastiques émanant de la formation ou liées directement à l'exploitation, des moyens (27) d'acquisition et d'enregistrement des signaux issus de chaque capteur de référence (T), en réponse aux ondes reçues, le dit ensemble d'acquisition et de traitement (7) des ondes reçues comportant des moyens de calcul programmés pour faire une analyse comparée des signaux issus des dits récepteurs (R1-Rn) et de chaque capteur de référence (T), et pour trier les enregistrements en différentes familles selon que les événements (E) dans la formation souterraine sont indépendants des événements (C1, C2) détectés par chaque capteur de référence (T) ou en dépendent directement ou indirectement.

13. Système selon la revendication 12, **caractérisé en ce qu'**il comporte au moins un capteur de référence (T) couplé mécaniquement avec un tube (3) d'exploitation de puits.

14. Système selon la revendication 12 ou 13, **caractérisé en ce qu'**il comporte au moins un capteur de référence (T) couplé mécaniquement avec un tube de cuvelage de puits en un point éloigné des récepteurs d'ondes élastiques.

15. Système selon l'une des revendications 12 à 14, **caractérisé en ce qu'**il comporte une pluralité de récepteurs d'ondes élastiques (R1-Rn) installés à demeure dans au moins un puits.

## Patentansprüche

1. Verfahren zum Erleichtern der Identifizierung von seismischen oder mikroseismischen auf die Exploitation einer unterirdischen Formation bezogenen Ereignissen, das die Anordnung, in einem oder mehreren Bohrlöchern, von Sensoren (R1-Rn) von elastischen von der unterirdischen Formation ausgehenden Wellen, welche direkt mit dieser gekoppelt sind, die Aufnahme der von den verschiedenen Sensoren (R1-Rn) stammenden Signale in Erwiderung auf die empfangenen Wellen und deren Aufzeichnung sowie eine Vergleichsanalyse der aufgezeichneten Signale umfasst, um die Aufzeichnungen auszuwählen, **dadurch gekennzeichnet, dass** es umfasst:
- die Anordnung wenigstens eines Referenzsensors (T), welche eine direkte akustische Kopplung mit den Elementen einer technischen Ausrüstung zur Exploitation der Formation für die Detektion der elastischen von der Formation ausgehenden oder direkt mit der Exploitation verbundenen Wellen umfasst;
- die Aufnahme der von jedem Referenzsensor (T) stammenden Signale, als Antwort auf die empfangenen Wellen, und
- die Vergleichsanalyse der von diesen Sensoren (R1-Rn) und von jedem Referenzsensor (T) stammenden Signale, um die Aufzeichnungen in verschiedene Familien zu sortieren, je nachdem, ob die Ereignisse (E) in der unterirdischen Formation von den durch jeden Referenzsensor (T) detektierten Ereignissen (C1, C2) unabhängig sind oder davon direkt oder indirekt abhängen.

2. Verfahren nach Anspruch 1, **dadurch gekennzeichnet, dass** es die Etablierung eines Katalogs von Ereignistypen mit einer kausalen Verbindung mit den Exploitationseingriffen in die unterirdische Formation durch Korrelation zwischen den Aufzeichnungen der jeweils durch die Sensoren (R1-Rn) und jedem Referenzsensor (T) erzeugten Signale umfasst.

3. Verfahren nach Anspruch 1, **dadurch gekennzeichnet, dass** es im übrigen die Kombination der Aufzeichnungen der von den Sensoren (R1-Rn) und jedem Referenzsensor (T) erzeugten Signale aufweist, was die Identifizierung der aufgezeichneten Ereignisse ermöglicht.

4. Verfahren nach einem der vorhergehenden Ansprüche, **dadurch gekennzeichnet, dass** es die Auswahl von Ereignisaufzeichnungen umfasst, die mit hydraulischen Frakturen zusammenhängen und die Bestimmung der Lage dieser Frakturen durch Vergleichsanalyse der von wenigstens zwei Mehrkomponentensensoren (R) stammenden Signale umfasst.

5. Verfahren nach einem der vorhergehenden Ansprüche, **dadurch gekennzeichnet, dass** es die Anordnung von permanenten Sensoren (R1-Rn) umfasst, die in wenigstens einem Bohrloch hinter einem Futterrohr (2) derart angeordnet sind, dass es für die Exploitation der unterirdischen Formation freigelassen wird.

6. Verfahren nach einem der vorhergehenden Ansprüche, **dadurch gekennzeichnet, dass** es die Anordnung von permanenten Sensoren (R1-Rn) umfasst, die in wenigstens einem ringförmigen Bohrloch zwischen einem Futterrohr (2) und einer Exploitationskolonne (3) angeordnet sind und akustisch von dieser Kolonne (3) derart entkoppelt sind, dass es zur Exploitation der unterirdischen Formation freigelassen wird.

7. Verfahren nach einem der Ansprüche 5 oder 6, **dadurch gekennzeichnet, dass** die permanenten Sensoren (R1-Rn) in einem gleichen Bohrloch angeordnet sind.

8. Verfahren nach einem der Ansprüche 5 oder 6, **dadurch gekennzeichnet, dass** die permanenten Sensoren (R1-Rn) in verschiedenen Bohrlöchern angeordnet sind.

9. Verfahren nach einem der vorhergehenden Ansprüche, **dadurch gekennzeichnet, dass** es die Verwendung wenigstens eines Referenzsensors (T) umfasst, der mechanisch mit einer Exploitationskolonne (3) der Formation gekoppelt ist.

10. Verfahren nach einem der Ansprüche 1 bis 8, **dadurch gekennzeichnet, dass** es die Verwendung wenigstens eines Referenzsensors (T) umfasst, der akustisch gleichzeitig mit einer Exploitationskolonne (3) und mit der Formation gekoppelt ist.

11. Verfahren nach einem der vorhergehenden Ansprüche, **dadurch gekennzeichnet, dass** es die Verwendung von mehreren Referenzsensoren (T) umfasst, die in verschiednen Tiefen wenigstens eines Bohrlochs angeordnet sind, was es ermöglicht, die Ausbreitungsrichtung von durch die Referenzsensoren erfassten Ereignissen zu bestimmen.

12. System zum Erleichtern der Identifizierung von seismischen oder mikroseismischen Ereignissen in einer unterirdischen Formation bei der Exploitation, das Sensoren (R1-Rn) von elastischen mit der von Bohrlöchern umgebenen Formation direkt gekoppelten Wellen, Mittel zur Aufnahme der von den verschiedenen Sensoren (R1-Rn) stammenden Signale in Erwiderung auf die empfangenen von der Formation ausgehenden Wellen und deren Aufzeichnung, Übertragungsmittel (6) und eine Aufnahme- und Bearbeitungsanordnung (7) der empfangenen Wellen umfasst, die ausgelegt ist, um eine Vergleichsanalyse der aufgezeichneten Signale vorzunehmen, um die Aufzeichnungen auszuwählen, **dadurch gekennzeichnet, dass** es wenigstens einen Referenzsensor (T), welcher eine direkte akustische Kopplung mit den Elementen einer technischen Ausrüstung zur Exploitation der Formation für die Detektion der elastischen von der Formation ausgehenden oder direkt mit der Exploitation direkt verbundenen Wellen aufweist, Mittel (27) zur Aufnahme und Aufzeichnung der von jedem Referenzsensor (T) stammenden Signale, als Antwort auf die empfangenen Wellen umfasst, wobei die Aufnahme- und Bearbeitungsanordnung (7) der empfangenen Wellen programmierte Berechnungsmittel umfasst, um die Vergleichsanalyse der von diesen Sensoren (R1-Rn) und von jedem Referenzsensor (T) stammenden Signale vorzunehmen und um die Aufzeichnungen in verschiedene Familien zu sortieren, je nachdem, ob die Ereignisse (E) in der unterirdischen Formation von den durch jeden Referenzsensor (T) detektierten Ereignissen (C1, C2) unabhängig sind oder davon direkt oder indirekt abhängen.

13. System nach Anspruch 12, **dadurch gekennzeichnet, dass** es wenigstens einen Referenzsensor (T) umfasst, der mechanisch mit einem Bohrlochexploitationsrohr (3) gekoppelt ist.

14. System nach Anspruch 12 oder 13, **dadurch gekennzeichnet, dass** es wenigstens einen Referenzsensor (T) umfasst, der mechanisch an einem von den Sensoren elastischer Wellen entfernten Punkt mit einem Bohrlochfutterrohr gekoppelt ist.

15. System nach Anspruch 12 bis 14, **dadurch gekennzeichnet, dass** es eine Vielzahl von Sensoren (R1-Rn) von elastischen Wellen umfasst, die fest in wenigstens einem Bohrloch installiert sind.

## Claims

1. Method for facilitating identification of seismic or micro-seismic events relating to the working of a subterranean formation, comprising installation in one or more wells of receivers (R1-Rn) for elastic waves emanating from the subterranean formation, coupled directly to the latter, acquisition of the signals coming from the different receivers (R1-Rn) in response to the waves received and recording thereof, and comparative analysis of the recorded signals to select recordings, **characterised in that** it comprises:
- installation of at least one reference pickup (T) exhibiting direct acoustic coupling with elements of technical equipment for working the formation for detection of the elastic waves emanating from the formation or linked directly to the working;
- acquisition of the signals coming from each reference pickup (T) in response to the waves received, and
- comparative analysis of the signals coming from said receivers (R1-Rn) and from each reference pickup (T) to sort the recordings into different families according to whether the events (E) in the subterranean formation are independent of the events (C1, C2) detected by each reference pickup (T) or depend directly or indirectly thereon.

2. Method according to claim 1, **characterised in that** it comprises establishment of a catalogue of typical events having a causal link with working actions on the subterranean formation by correlating the recordings of the signals produced respectively by said receivers (R1-Rn) and by each reference pickup (T).

3. Method according to claim 1, **characterised in that** it additionally comprises combination of the recordings of the signals produced by said receivers (R1-Rn) and by each reference pickup (T), allowing identification of recorded events.

4. Method according to one of the preceding claims, **characterised in that** it comprises selection of recordings of events linked to hydraulic fractures and determination of the location of these fractures by comparative analysis of the components of the signals coming from at least two multi-component receivers (R).

5. Method according to one of the preceding claims, **characterised in that** it comprises installation of permanent receivers (R1-Rn) disposed in at least one well behind a casing tube (2) so as to leave it free for working of the subterranean formation.

6. Method according to one of the preceding claims, **characterised in that** it comprises installation of permanent receivers (R1-Rn) disposed in at least one well in the annulus between a casing tube (2) and a working riser (3), and decoupled acoustically from this riser (3), so as to leave it free for working of the subterranean formation.

7. Method according to one of claims 5 or 6, **characterised in that** the permanent receivers (R1-Rn) are installed in a same well.

8. Method according to one of claims 5 or 6, **characterised in that** permanent receivers (R1-Rn) are installed in different wells.

9. Method according to one of the preceding claims, **characterised in that** it comprises use of at least one reference pickup (T) coupled mechanically to a riser (3) for working of said formation.

10. Method according to one of claims 1 to 8, **characterised in that** it comprises use of at least one reference pickup (T) coupled acoustically both to a riser (3) for working of said formation and to said formation.

11. Method according to one of the preceding claims, **characterised in that** it comprises use of a plurality of reference pickups (T) placed at different depths in at least one well, allowing determination of the direction of propagation of events picked up by the reference pickups.

12. System for facilitating identification of seismic or micro-seismic events in a subterranean formation during working, comprising receivers for elastic waves (R1-Rn) coupled directly to the formation surrounding the wells, means for acquisition of the signals coming from the different receivers (R1-Rn) in response to the waves received emanating from the formation and recording thereof, means for transmission (6) and an assembly for acquisition and for processing (7) of the waves received adapted to make a comparative analysis of the recorded signals to select recordings, **characterised in that** it comprises at least one reference pickup (T) exhibiting direct acoustic coupling with elements of technical equipment for working the formation for detection of the elastic waves emanating from the formation or linked directly to the working, means (27) for acquisition and recording of the signals coming from each reference pickup (T) in response to the waves received, said assembly for acquisition and processing (7) of the waves received comprising calculating means programmed to make a comparative analysis of the signals coming from said receivers (R1-Rn) and each reference pickup (T), and to sort the recordings into different families according to whether the events (E) in the subterranean formation are independent of the events (C1, C2) detected by each reference pickup (T) or depend directly or indirectly thereon.

13. System according to claim 12, **characterised in that** it comprises at least one reference pickup (T) coupled mechanically to a well working tube (3).

14. System according to claim 12 or 13, **characterised in that** it comprises at least on reference pickup (T) coupled mechanically to a well casing tube at a point remote from the receivers for elastic waves.

15. System according to one of claims 12 to 14, **characterised in that** it comprises a plurality of receivers for elastic waves (R1-Rn) installed permanently in at least one well.
